(19) Europäisches Patentamt / European Patent Office / Office européen des brevets

(11) **EP 2 526 353 B1**

(12) **EUROPÄISCHE PATENTSCHRIFT**

(45) Veröffentlichungstag und Bekanntmachung des Hinweises auf die Patenterteilung:
**11.03.2020   Patentblatt 2020/11**

(21) Anmeldenummer: **11700929.0**

(22) Anmeldetag: **18.01.2011**

(51) Int Cl.:
**F25B 41/06** *(2006.01)*      **F25B 49/02** *(2006.01)*

(86) Internationale Anmeldenummer:
**PCT/EP2011/050611**

(87) Internationale Veröffentlichungsnummer:
**WO 2011/089116 (28.07.2011 Gazette 2011/30)**

(54) **VERFAHREN FÜR DIE STEUERUNG UND REGELUNG VON WÄRMEPUMPEN UND KÜHLANLAGEN**

METHOD FOR CONTROLLING AND REGULATING HEAT PUMPS AND COOLING SYSTEMS

PROCÉDÉ DE COMMANDE ET DE RÉGLAGE DE POMPES À CHALEUR ET D'INSTALLATIONS RÉFRIGÉRANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2010   DE 102010001024**

(43) Veröffentlichungstag der Anmeldung:
**28.11.2012   Patentblatt 2012/48**

(73) Patentinhaber: **Honeywell Technologies Sarl 1110 Morges (CH)**

(72) Erfinder: **RÄHDER, Christian 02797 Lückendorf (DE)**

(74) Vertreter: **TBK Bavariaring 4-6 80336 München (DE)**

(56) Entgegenhaltungen:
WO-A1-2008/080436      DE-A1- 3 713 869
DE-A1- 19 506 143      US-A- 4 523 435
US-A- 5 735 134        US-A- 5 966 950

- CHEN Y ET AL: "A study on the operational stability of a refrigeration system having a variable speed compressor", INTERNATIONAL JOURNAL OF REFRIGERATION, ELSEVIER, PARIS, FR, vol. 31, no. 8, 1 December 2008 (2008-12-01), pages 1368-1374, XP025644596, ISSN: 0140-7007, DOI: 10.1016/J.IJREFRIG.2008.04.012 [retrieved on 2008-05-10]
- HONG W ET AL: "A Pulse Width Modulation Control System for Regulating Refrigerant Flow Into an Evaporator", 19920217; 19920217 - 19920221, vol. 1, 17 February 1992 (1992-02-17), pages 603-607, XP010258103,

**Beschreibung**

Die vorliegende Erfindung betrifft ein Verfahren zum Steuern einer Wärmepumpe beziehungsweise einer Kühleinrichtung.

Insbesondere betrifft die Erfindung ein Verfahren zur Steuerung und Regelung des Verdampfungsprozesses einer Wärmepumpe bzw. Kühleinrichtung.

In einer Wärmepumpe bzw. Kühleinrichtung sind ein oder mehrere Verdampfer, ein oder mehrere Verdichter, ein oder mehrere Kondensator/en bzw. Verflüssiger und ein oder mehrere durch ein Regelgerät regelbare/s Expansionsventil/e in einem geschlossenen Kreislauf hintereinander angeordnet.

Bei einem z.B. aus der Patentschrift US-4523435 bekannten Regelgerät dieser Art wird das Expansionsventil so gesteuert, dass möglichst keine unverdampfte Kühlflüssigkeit aus dem Verdampfer über die Saugleitung in den Verdichter bzw. Kompressor gelangt. Zu diesem Zweck wird dort das Stellsignal des Expansionsventils in Abhängigkeit von der Größe und Änderungsgeschwindigkeit der Überhitzungstemperatur des Dampfes im Verdampfer gesteuert, wobei der Sollwert der Überhitzungstemperatur fest eingestellt wird.

Ein weiteres Verfahren und eine Vorrichtung dieser Art sind in der Patentschrift DE 37 13 869 C2 beschrieben. Dabei wird ein Sollwert der Überhitzungstemperatur des Kältemittels den jeweiligen Betriebsbedingungen, wie Kälteleistung, Unterkühlung, Verdampfungstemperatur usw., unabhängig von der Art des Kältemittels selbsttätig angepasst. Diese Anpassung wird dadurch bewirkt, dass der Überhitzungstemperatur-Sollwert in Abhängigkeit von der Änderungsgeschwindigkeit der Überhitzungstemperatur dann geändert wird, wenn die Überhitzungstemperatur voreingestellte Grenzwerte über- bzw. unterschreitet.

Die Überhitzungstemperatur gemäß der DE 37 13 869 C2 wird als Differenz der Temperatur des Kältemittels am Ausgang und am Eingang der Verdampfereinrichtung über entsprechende Sensoren ermittelt.

Ein weiterer Ansatz zur Regelung von Kälte- und Wärmepumpanlagen, bei denen der Dampfdruck starken Schwankungen unterliegt, ist aus der Patentschrift DE 195 06 143 C2 bekannt. Dabei wird die Variabilität einer Anzahl von Abtastwerten der Temperatur des Kältemittels am Ausgang der Verdampfereinrichtung um einen Mittelwert der Abtastwerte in einer Funktion charakterisiert. Die Variabilität oder Streuung dieser Funktion dient als ein Maß für die Stabilität der Temperatur des Kältemittels am Ausgang der Verdampfereinrichtung. Je höher die Stabilität ist, umso geringer kann der Überhitzungstemperatur-Sollwert gewählt werden. Dabei wird eine Erhöhung des Sollwertes für die Variabilität der Dampftemperatur am Ausgang der Verdampfereinrichtung bewirkt, wenn die Verdampfungstemperatur des Kältemittels sehr instabil ist, d. h. sich ihre Variabilität erhöht. Gleichzeitig wird eine größere Variabilität der Dampftemperatur toleriert, wenn die Verdampfungstemperatur stärker schwankt. Die Größe der die Variabilität der Verdampfungstemperatur charakterisierenden Funktion kann mit einem Faktor gewichtet werden. Auf diese Weise wird eine Instabilität der Verdampfungstemperatur anders als eine Instabilität der Dampftemperatur berücksichtigt. Weitere Verfahren für die Steuerung und Regelung der Überhitzungstemperatur eines Kältemittels in einer Verdampfungseinrichtung sind aus den US 5735134, US 5966950 und WO 2008/080436 A1 bekannt.

Der vorliegenden Erfindung liegt die Aufgabe zugrunde, ein verbessertes Verfahren zum Regeln einer Wärmepumpen- oder Kälteanlage bereitzustellen, das einen verbesserten Wirkungsgrad der Anlage bewirkt.

Diese Aufgabe ist durch ein Verfahren nach Patentanspruch 1 gelöst.

Weitere Merkmale und vorteilhafte Ausführungen sind in den abhängigen Ansprüchen gezeigt.

Gemäß einem Aspekt der Erfindung ist ein Verfahren für die Steuerung und Regelung der Überhitzungstemperatur eines Kältemittels in einer Verdampfungseinrichtung im Kreislauf eines Anlagensystems einer Wärmepumpe oder Kühlanlage, bereitgestellt, welches dadurch gekennzeichnet ist, dass für die Sollwert-Bestimmung für die Regelgröße eine virtuelle Energiestrom-Bilanz gebildet wird, wobei die virtuelle Energiestrom-Bilanz derart gebildet wird, dass sich die virtuelle Energiestrom-Bilanz in allen Arbeitpunkten der Wärmepumpe oder Kühlanlage näherungsweise proportional zur realen Energiestrom-Bilanz verhält, indem eine virtuelle Wärmeleistung der Verdampfungseinrichtung bestimmt wird, die funktionell abhängig ist von den bekannten Größen Überhitzungstemperatur, spezifische Wärmekapazität des Kältemittels und spezifische Enthalpie im Sattdampfzustand, Hub des Expansionsventils und einem Korrekturfaktor, welcher für jeden Arbeitspunkt des Expansionsventils gebildet wird.

Gemäß der Erfindung ist das Verfahren weiterhin dadurch gekennzeichnet, dass über den Arbeitsbereich der Wärmepumpe oder Kühlanlage die Abhängigkeit zwischen virtueller Wärmeleistung und Überhitzungstemperatur an der Stabilitätsgrenze des Regelungssystems als virtuelle MSS-Kennlinie genutzt wird.

Die Funktionswerte, die bei bekannter virtueller Wärmeleistung aus der Funktion für die virtuelle MSS-Kennlinie bestimmbar sind, werden für die Bestimmung des Sollwerts genutzt.

Weiterhin hängt vorzugsweise der Sollwert der Regelgröße außer von dem mittels virtueller MSS-Kennlinie bestimmbaren Wert weiterhin von einem vorgebbaren Wert ab, der einen Mindestwert der Überhitzungstemperatur mit einem bestimmten Abstand zur MSS-Kennlinie darstellt, so dass ein möglichst stabiler Zustand erreicht wird.

Das Anlagensystem kann hinsichtlich einer stabilen bzw. instabilen Prozesssituation überwacht werden, wobei bei Erkennung einer instabilen Prozesssituation eine zusätzliche Überhöhungstemperatur dem Sollwert hinzuaddiert wird, um damit ein schnelles Schließen des Expansionsventils zu erreichen und den Regelungsprozess damit in den stabilen Arbeitsbereich zu überführen.

Die Arbeitsweise des Prozesses und der Regeleinrichtung wird vorzugsweise selbsttätig daraufhin kontrolliert, ob diese sich im stabilen Arbeitsbereich befinden, indem mittels auf messbare Größen und Parameter gestützten statischen und dynamischen Merkmalen die Stabilität bzw. Instabilität festgestellt wird.

Weiterhin gilt vorzugsweise, dass in jedem der mit einem zeitlichen Abstand aufeinanderfolgend aufgenommenen Prozesszustände eine selbsttätige Korrektur der virtuellen MSS-Kennlinie um einen solchen Wert erfolgt, dass eine Anpassung an die im jeweiligen Arbeitspunkt tatsächlich bestehenden Prozesseigenschaften erreicht wird und somit die virtuelle MSS-Kennlinie im wesentlichen proportional zur realen MSS-Kennlinie verläuft.

Die Stabilität und Stationarität des Verdampfungsprozesses über festlegbare Zeitabschnitte wird vorzugsweise dadurch festgestellt, dass für die Werte der messbaren und rechnerisch rekonstruierbaren Größen Toleranzbänder festgelegt werden, die nicht zu verlassen sind, damit eine Korrektur von Sollwert bzw. MSS-Kennlinie nur dann erfolgt, wenn sich der Prozess in einem stationären bzw. stabilen Zustand befindet.

Änderungen des Sollwerts oder von Punkten der virtuellen MSS-Kennlinie sind vorzugsweise nur so groß zulässig, dass dadurch keine Schwankungen der Prozessgrößen, insbesondere der Regelgröße, entstehen, indem eine möglichst stetige Verstellung des wirksamen Sollwerts im Regler gewährleistet ist.

Weiterhin gilt vorzugsweise, dass die Monotonie des Verlaufs der virtuellen MSS-Kennlinie selbsttätig kontrolliert und gewährleistet wird.

Im Folgenden ist die Erfindung anhand bevorzugter Ausführungsbeispiele mit Bezugnahme auf die anhängenden Figuren beschrieben.

In den Figuren gilt:

Fig. 1 zeigt ein R&I-Fließbild (Rohrleitungs- und Instrumentenfließbild) für Wärmepumpen bzw. Kühlanlagen mit Verdampfungsregelung;

Fig. 2 zeigt reale und virtuelle MSS-Kennlinien;

Fig. 3 zeigt einen Messdatenvergleich der Verläufe von realer und virtueller Wärmeleistung;

Fig. 4 zeigt einen Verlauf der Überhitzungstemperatur mit verschiedenen Prozesssituationen;

Die Figuren 5a und 5b zeigen einen Programmablaufplan gemäß einem Ausführungsbeispiel der Erfindung; und

Fig. 6 zeigt Blockschema eines technisch ausgeführten Steuer- und Regelsystems gemäß einem Ausführungsbeispiel.

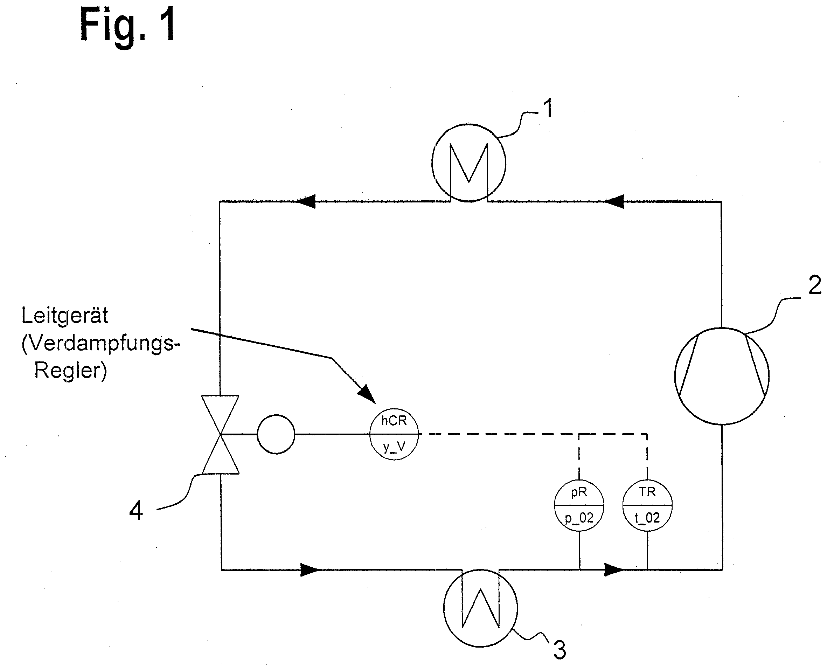

Das Verfahren ist für die Steuerung und Regelung des Verdampfungsprozesses einer Wärmepumpe bzw. Kühleinrichtung (siehe Figur 1) vorgesehen und dient insbesondere den Aufgaben:

- Bestimmung des optimalen Sollwerts $T_{Ü,Soll} \rightarrow$ Opt. für die Regelgröße, d.h. für die Überhitzungstemperatur $T_Ü$, wobei das Optimum sowohl den hohen Wirkungsgrad des Verdampfungsprozesses einschließt als auch ein günstiges Stellverhalten des Regelungssystems bedingt.
- Kontrolle und Gewährleistung der stabilen Arbeitsweise des geregelten Verdampfungsprozesses.
- Kompensation von Störwirkungen, die zu Abweichungen der Regelgröße $T_Ü$ von ihrem Sollwert $T_{Ü,Soll}$ führen.

Die drei genannten Aufgabenbereiche werden durch eine nach dem erfindungsgemäßen Verfahren arbeitende Steuer- und Regeleinrichtung in komplexer Weise gelöst, indem sowohl die Bestimmung des optimalen Sollwerts, als auch die Störungskompensation in der Umgebung des optimalen Sollwerts eine Stabilitätsprüfung einschließen.

Funktionsweise des Verfahrens:

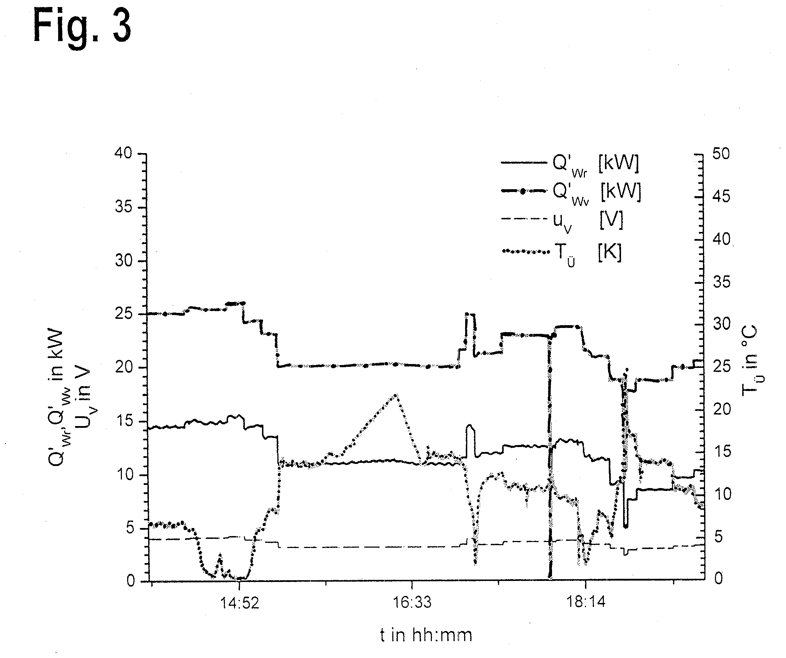

Die Bestimmung des optimalen Sollwerts für die Überhitzungstemperatur $T_Ü$ erfolgt durch Benutzung einer "Virtuellen MSS-Kennlinie $\dot{Q}_{Wv}(T_{Ü,MSS})$", die in Näherung zur Real-Kennlinie $\dot{Q}_{Wr}(T_{Ü,MSS})$ proportional verläuft (siehe dazu Figur 3) und den Zusammenhang zwischen der aus Messwerten bestimmbaren Überhitzungstemperatur (nach der Formel: $T_Ü = T_{nV} - T_V(p_V)$) und der virtuellen Wärmeleistung des Verdampfers beschreibt, die aus der Formel folgt:

$$\dot{Q}_{Wv,i} = \left(T_Ü \cdot c_p'' + h''\right)_i \cdot K_{EXV} \cdot y_{EXV,i} \qquad (1)$$

Signalwerte und prozessspezifische Kennwerte in der Formel (1) sind:

$y_{EXV}$ =        Stellhub $y_{EXV}$ des Expansionsventils;

$h''(p_V)$ =        Sattdampf-Enthalpie des Kältemittels im Verdampfer;

$c_p''(p_V)$ =        spezifische Wärmekapazität des Sattdampfes;

$T_{\ddot{U},i}$ =        Überhitzungstemperatur bei Druck $p_{V,i}$;

$K_{EXV}$ =        Korrektur-Koeffizient, ventilspezifisch, bestimmt sich aus Formel (2):

$$K_{EXV} = \left[ \frac{\dot{Q}_{Wr}}{y} \cdot \frac{1}{h''} \right]_{EXV,max} \qquad (2)$$

wobei $\dot{Q}_{Wr}$ der gemäß Ventil-Daten für maximalen Hub übertragbaren realen Wärmeleistung entspricht, und der Index i den aktuellen Arbeitspunkt i, d.h. die Lage von $\dot{Q}_{Wv,i}$ im Bereich $\dot{Q}_{Wv} = 0 \ldots \dot{Q}_{Wv,EXV,max}$ kennzeichnet.

Indem die Enthalpie h" mit der Temperatur im Verdampfer $T_V(p_V)$ verknüpft ist, besteht auch ein Zusammenhang mit der Überhitzungstemperatur, so dass durch die erklärte Bestimmung von $K_{EXV,i}$ die zustandsabhängigen Eigenschaften des Verdampfungsprozesses berücksichtigt werden.

Die nach den oben beschriebenen Zusammenhängen bestimmbare virtuelle MSS-Kennlinie beschreibt den Verlauf der Abhängigkeit $\dot{Q}_{Wv}(T_{\ddot{U},MSS})$, d.h. der Grenzlinie zwischen stabiler und instabiler Arbeitsweise des Regelungsprozesses näherungsweise so, wie dies von der realen MSS-Kennlinie $\dot{Q}_{Wr}(T_{\ddot{U},MSS})$, bekannt ist.

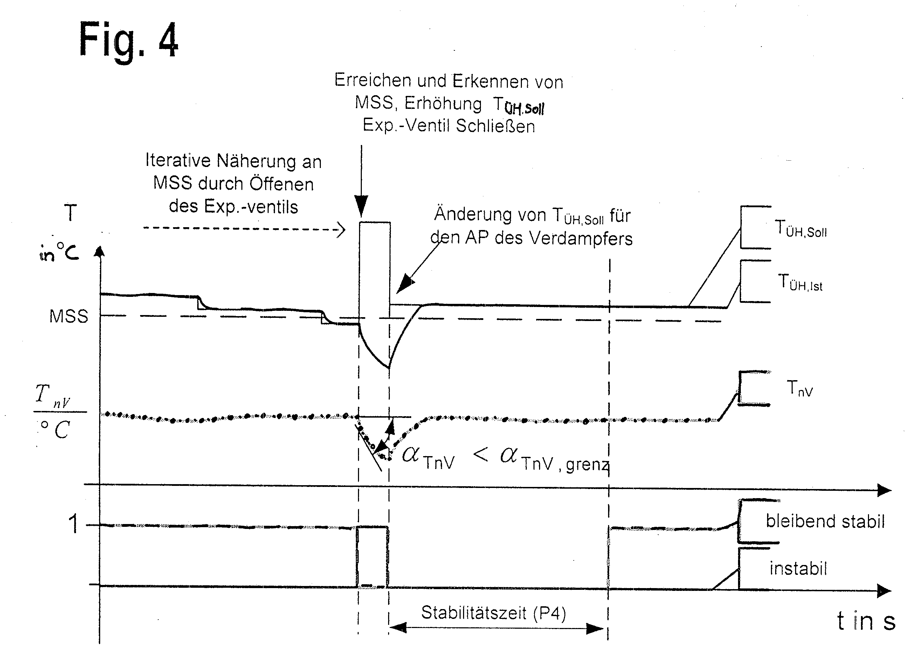

Durch ein Funktionsmodul der Steuer- und Regeleinrichtung können aus den bekannten Werten von $T_{nV}$, $p_V$ bzw. $T_V$ und $y_{EXV}$ in jedem Abtastschritt- oder Arbeitspunkt i die Überhitzungstemperatur $T_{\ddot{U},MSS,i}$, die virtuelle Wärmeleistung $\dot{Q}_{Wv,i}$ und der Anstiegswinkel $\alpha_{TnV}$ der Temperatur am Verdampferaustritt bestimmt werden, so wie dies in Figur 4 dargestellt ist.

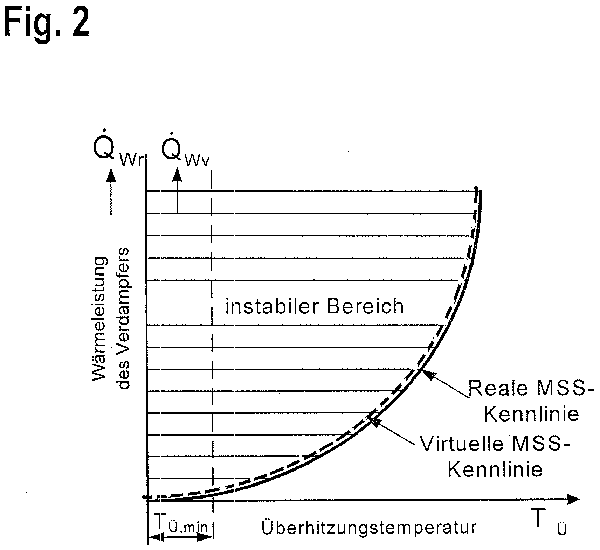

Dazu erfolgt selbsttätig eine Stabilitätsprüfung nach statischen und dynamischen Kriterien. Als Merkmale für einen stabilen Prozesszustand im Arbeitspunkt i werden der in Figur 4 erklärte Anstiegswinkel $\alpha_{TnV}$ und der Abstand der Überhitzungstemperatur $T_{\ddot{U},i}$ von dem Grenzwert $T_{\ddot{U},MSS,i}$ (wie in Figur 2 dargestellt) auf die Einhaltung der Stabilitätsbedingungen hin untersucht.

Ein Punkt der virtuellen MSS-Kennlinie $\dot{Q}_{Wv}(T_{\ddot{U},MSS})$ wird bestätigt, wenn der Wert der virtuellen Wärmeleistung $\dot{Q}_{Wv,i}$ aus den bekannten Werten im Abtastpunkt i zu einem Wert der Überhitzungstemperatur $T_{\ddot{U},i}$ gehört, der genau auf der virtuellen MSS-Kennlinie liegt, so dass die Bedingung erfüllt ist: $T_{\ddot{U},i} = T_{\ddot{U},MSS,i}$.

Wird aber erkannt, dass $T_{\ddot{U},i} \neq T_{\ddot{U},MSS,i}$ gilt und zugleich $\alpha_{TnV}$ auf instabiles Verhalten hinweist, so wird in einem oder mehreren Änderungsschritten der Wert für $T_{\ddot{U},MSS,i}$ so korrigiert, dass für $\dot{Q}_{Wv,i}$ ein Punkt der virtuellen MSS-Kennlinie erreicht wird.

Wenn erkannt wird, dass der Grenzwert $T_{\ddot{U},MSS,i}$ durch den aktuellen Messwert $T_{\ddot{U},i}$ überschritten ist, d.h. der Verdampfungsprozess stabil arbeitet, aber die zugeführte Energie aus der Wärmequelle (z.B. Sole- oder Luftstrom) nicht optimal genutzt ist, erfolgt durch den Regler eine solche Verstellung am Expansionsventil, die eine Erhöhung des Kältemittel-Mengenstroms bewirkt und damit eine Verringerung von $T_{\ddot{U},i}$ um $\Delta T_{\ddot{U},i}$ erreicht. Dies erfolgt so lange, bis der Prozesszustand der Stabilitätsgrenze so nahe gekommen ist, dass $T_{\ddot{U},i} \approx T_{\ddot{U},MSS,i}$ erkennbar ist.

Wird hingegen die Unterschreitung des Wertes $T_{\ddot{U},MSS,i}$ festgestellt, der durch die MSS-Kennlinie festgelegt ist, d.h. ein instabiler Prozesszustand erkannt, dann wird vom Regler der Kältemittel-Mengenstrom so lange verringert, bis ebenfalls der Prozesszustand der Stabilitätsgrenze so nahe gekommen ist, dass $T_{\ddot{U},i} \approx T_{\ddot{U},MSS,i}$ erkennbar ist.

Indem die Kontrolle und Korrektur der virtuellen MSS-Kennlinie für jeden abgetasteten Arbeitspunkt i erfolgt, realisiert sich durch das Verfahren eine quasi permanente selbsttätige Nachführung der virtuellen MSS-Kennlinie und damit der Basisfunktion für die Bestimmung des optimalen Sollwerts $T_{\ddot{U},soll,i}$.

Die durch die virtuelle MSS-Kennlinie festgelegte kritische Überhitzungstemperatur $T_{\ddot{U},MSS}$ ist eine vom Prozesszustand abhängige Variable und berücksichtigt Änderungen des Prozessverhalten für verschiedene Arbeitspunkte.

Ein optimales Betriebsverhalten des Verdampfers wird dadurch gesichert, dass der Sollwert für die Regelgröße ($T_{\ddot{U},Soll}$) sich aus der Formel (3) bestimmt:

$$T_{\ddot{U},Soll} = T_{\ddot{U},MSS} + T_{\ddot{U},min} \qquad (3)$$

wobei $T_{\ddot{U},min}$ einen anlagenspezifisch festzulegenden Wert zugewiesen bekommt, d.h. als Konstante oder zustandsabhängige Variable wirksam ist und sicherstellt, dass eine Mindest-Überhitzung im Verdampfer erfolgt.

Mit der Kenntnis von $T_{\ddot{U},MSS,i}$ ist indirekt auch ein Sollwert $T_{\ddot{U},Soll,i}$ zu bestimmen, der einen gesicherten Abstand

$T_{\ddot{U},min}$ zur Stabilitätsgrenze besitzt und anlagenspezifisch eingestellt werden kann. Damit wird der Verdampfungsprozess in allen Arbeitspunkten dicht entlang der MSS-Kennlinie realisiert, d.h. mit gutem Wirkungsgrad, arbeitet dabei aber sicher stabil.

Zudem wird eine günstige Arbeitsweise der Regelung dadurch unterstützt, dass die Regelgröße eine zulässige Schwankungsbreite um den Sollwert von $\pm \Delta T_{Tol}$ besitzt, die nicht oder nur zu geringen Änderungen der Stellgröße $y_{EXV}$ führt.

Schwingungen bzw. Schwankungen der Prozessgrößen und der Stelleinrichtung werden weitgehend vermieden, indem eine Nachführungssteuerungsfunktion für eine nahezu stetige Sollwertänderung sorgt.

Für jeden Abtastzyklus kann eine Änderung des Grenzwerts der Überhitzungstemperatur $T_{\ddot{U},MSS}$ bzw. des Sollwerts $T_{\ddot{U},Soll}$ nach der Formel (4) bestimmt werden:

$$\Delta T_{Zykl} = \frac{T_{\ddot{U},MSS,i} - T_{\ddot{U},MSS,j}}{t_{Ausgl}} \cdot T \qquad (4)$$

wobei $t_{Ausgl}$ eine vorzugebende Zeitdauer für einen Umschaltvorgang von $T_{\ddot{U},Soll}$ zwischen zwei Arbeitspunkten oder -bereichen ist.

Durch eine weitere Steuerungsfunktion wird sichergestellt, dass die virtuelle MSS-Kennlinie ebenso wie die reale MSS-Kennlinie einen den physikalischen Zusammenhängen geschuldeten monotonen Funktionsverlauf einhält.

Fig. 1 zeigt schematisch den Anlagenaufbau einer Wärmepumpe bzw. Kälteanlage gemäß einem Ausführungsbeispiel der Erfindung, wobei ein Verdampfer 3, ein Verdichter 2, ein Kondensator 1 und ein Expansionsventil in einem Kreislauf angeordnet sind, in dem ein Kältemittel zirkuliert.

Das als R&I-Fließbild ausgeführte Anlagenschema einer Wärmepumpe mit beliebiger Wärmequelle (Luft, Sole, Wasser, Abwasser) gemäß Fig. 1 erläutert speziell die Anordnung des Verdampfers 3, der die Wärmeübertragung vom wärmetragenden Medium an das Kältemittel realisiert. Für die energetische Effizienz des Verdampfungsprozesses ist wichtig, dass die Temperatur des Kältemittels am Verdampfereintritt möglichst niedrig ist, damit eine höchstmögliche mittlere Temperaturdifferenz zwischen Wärmeträger und Kältemittel für einen maximalen Wärmestrom zwischen den Medien sorgt.

Die Figuren 2 und 3 zeigen reale und virtuelle MSS-Kennlinen sowie gemessene reale Verläufe.

Die MSS-Kennlinie entspricht einer Grenzlinie zwischen einer stabilen Arbeitsweise des Verdampfungsprozesses und einem instabilen Betrieb des Verdampfers und damit des Regelkreises für den Austrittszustand des Kältemittels am Verdampfer.

Mit steigender Wärmeleistung erhöht sich die Überhitzungstemperatur, d.h. die Temperaturdifferenz des Kältemittels zwischen Verdampfereintritt und -austritt, wobei der Zusammenhang in Fig. 2 dargestellt ist.

Mit $T_{\ddot{U},min}$ ist eine minimale Temperaturerhöhung festgelegt. Im instabilen Bereich unterschreitet $T_{\ddot{U}}$ den für den Kreisprozess optimalen Sollwert $T_{\ddot{U},Soll}$ und mittels Verstellung des Expansionsventils als Stellglied dieses Regelkreises wird durch den Verdampfungsregler der Mengenstrom des Kältemittels verringert. Dieser Regelungsvorgang muss schnell erfolgen, so dass es zu Schwingungen kommt. Überschreitet $T_{\ddot{U}}$ den Sollwert, dann arbeitet diese Regelung zwar stabil, aber nicht technologisch optimal.

Der Verdampfungsregler, dessen Arbeitsweise durch die neue Funktionsvorschrift gegenüber dem Stand der Technik zu einer Verbesserung des Verhaltens des Verdampfungsprozesses entlang der MSS-Kennlinie führt, sorgt für eine gegenüber dem Stand der Technik genauere Betriebsführung des Verdampfers.

Der reale Wärmestrom vom Wärmeträger an das Kältemittel ist auf Grundlage der Messgrößen $p_{nV}$ und $T_{nV}$ und deren Informationsauswertung nicht bestimmbar.

Indem der vom Regler bestimmte und damit bekannte Stellhub, der mit dem Kälte-Mittelstrom korreliert, als Informationsgröße genutzt wird, kann die virtuelle Wärmeleistung ermittelt werden, die sich näherungsweise proportional zur realen Wärmeleistung verhält, wie durch die Verläufe der Größen in Fig. 3 dargestellt ist.

Indem außerdem eine Information aus der bestimmbaren Änderungsgeschwindigkeit der gemessenen Temperatur $T_{nV}$ gewonnen wird, zeigt sich am Winkel $\alpha_{TnV}$, dass bei Erreichen des MSS-Zustands ein schnelles und starkes Absinken von $T_{nV}$ eintritt, wie aus Fig. 4 erkennbar ist.

Dieses Verhalten resultiert daraus, dass zwischen dem Winkel $\alpha_{TnV}$ und der Wärmeleistungsbilanz am Verdampfer eine physikalisch gut erklärbare Korrelation besteht. Durch die Figuren 2 bis 4 wird deutlich, dass die für die neuartige Funktionsvorschrift benutzten realen Messgrößen $p_{nV}$, $T_{nV}$, $y_{EXV}$ und die daraus bestimmbare virtuelle Prozessgröße $\dot{Q}_{WV}$ eine sichere Informationsgrundlage für die Prozessbeobachtung bilden.

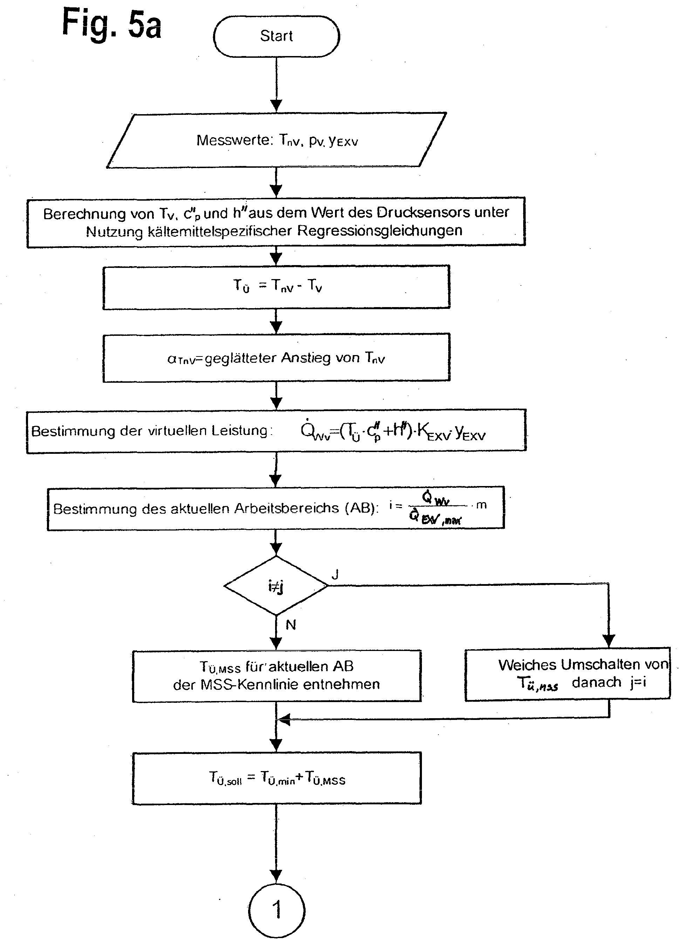

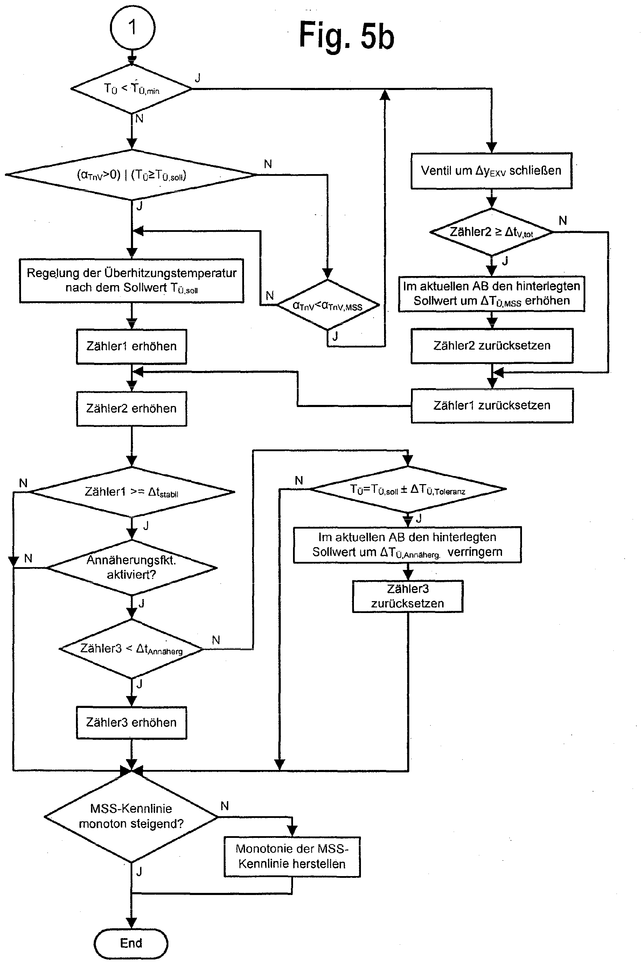

In den Figuren 5a und 5b ist die Aufnahme der gemessenen Prozessgrößen und deren Informationsauswertung veranschaulicht.

Durch die permanente und sichere Beobachtung und Führung des Verdampfungsprozesses entlang der virtuellen MSS-Kennlinie werden Abweichungen vom energetisch optimalen Prozessverlauf zum einen sicher erkannt und können damit zur Grundlage einer solchen Sollwerteinstellung für $T_{Ü,Soll}$ genutzt werden, die sowohl analytisch bestimmbar ist und zum anderen eine Nachführung der virtuellen MSS-Kennlinie erlaubt, damit diese möglichst dicht an der realen MSS-Kennlinie verläuft.

Für die Bestimmung der virtuellen Wärmeleistung des Verdampfungsprozesses, die als Ersatzgröße zur tatsächlichen, aber durch die vorhandenen Messdaten nicht ermittelbaren Wärmeleistung eine für das Verfahren entscheidende Bewertungsgrundlage des Verdampfungsprozesses ist, werden die Mess- bzw. bekannten Größen $T_{nV}$ (Temperatur des Kältemittels am Verdampferaustritt), $p_V$ (Druck des Kältemittels im Verdampfer) und $y_{EXV}$ (Ventilhub des Expansionsventils) in einem Arbeitstakt des Reglers aufgenommen.

Aus dem Druck $p_V$ kann unter der Annahme, dass dieser über die gesamte Verdampferfläche (-länge) näherungsweise konstant ist aus den in jedem Arbeitspunkt i gemessenen $p_{V,i}$ sowie den thermodynamischen Kennwerten des jeweiligen Kältemittels $c''_{p,i}$ und $h''_i$ (spezifische Wärmekapazität und Enthalpie im Sättigungszustand) zunächst die Temperatur des Kältemittels $T_{V,i}$ ($p_{V,i}$) und daraus die Überhitzungstemperatur $T_{Ü,i}$ mittels des Zusammenhangs

$$T_{Ü} = T_{nV} - T_V \qquad (5)$$

gewonnen worden.

Für den mittels Filter geglätteten Zeitverlauf der Größe $T_{nV}$ wird deren Anstieg

$$\alpha_{TnV} = \frac{\Delta T_{nV}}{\Delta t} \qquad (6)$$

über die wählbare Zeitlänge $\Delta t$ bestimmt, der auch als Änderungsgeschwindigkeit der Größe $T_{nV}$ zu verstehen ist und für die Prozessbewertung in der Umgebung der MSS-Kennlinie genutzt wird. Bei einem kleinen Zeitschritt $\Delta t$ kann vorteilhafterweise durch eine Mittelwertbildung für die Abhängigkeit $\alpha_{TnV}(T_{gl})$ über eine Zeitlänge $T_{gl} = n \cdot \Delta t$ die Wirkung von stochastischen Einflüsse verringert werden.

Die Bestimmung der virtuellen Wärmeleistung $\dot{Q}_{Wv}$ erfolgt im Arbeitspunkt bzw. Arbeitsbereich (AB) (Index i) mittels des Zusammenhangs:

$$\dot{Q}_{Wv,i} = (T_{Ü} \cdot c''_p + h'') \cdot K_{EXV} \cdot y_{EXV,i} \qquad (6)$$

Darin ist $K_{EXV}$ ein Koeffizient, der im Nennarbeitspunkt des Expansionsventils die Wärmeleistung des Kältemittels für den Ventilhub $y_{EXV,N}$ ausdrückt. Der Wert für $K_{EXV}$ kann aus den Herstellerangaben für das Expansionsventil ermittelt werden.

Der Index i des aktuellen Arbeitsbereichs (AB) ergibt sich aus der wählbaren Gesamt-Anzahl m der Arbeitsbereiche über die MSS-Kennlinie durch die Beziehung:

$$i = \frac{\dot{Q}_{Wv}}{\dot{Q}_{EXV,max}} \cdot m \qquad (7)$$

Mit dem Index j ist der im vorhergehenden Schritt ausgewertete Prozesszustand benannt. Durch einen Vergleich der Werte für i und j wird ermittelt, ob der für die Auswertung von Prozesszustand i benötigte Wert für $T_{Ü,MSS} = T_{Ü,MSS,i}$ mit dem Wert für $T_{Ü,MSS,j}$ aus der MSS-Kennlinie übereinstimmt. Ist das der Fall, dann wird $T_{Ü,MSS}$ für den aktuellen Arbeitsbereich aus der MSS-Kennlinie entnommen.

Ist aber die Bedingung $i \neq j$ zutreffend, dann wird mittels weicher Umschaltung auf den Wert für $T_{Ü,MSS}$ des aktuellen Arbeitsbereichs gestellt.

$$T_{\ddot{U},Soll} = T_{\ddot{U},min} + T_{\ddot{U},MSS}$$

Der Sollwert $T_{\ddot{U},Soll}$ für den Regler wird dann auf den Wert gestellt, wobei $T_{\ddot{U},min}$ ein vorzugebender Wert ist, der die spezifischen Eigenschaften des jeweiligen Verdampfersystems berücksichtigt.

Gemäß Fig. 5b erfolgt zunächst eine Kontrolle, ob die Bedingung $T_{\ddot{U}} < T_{\ddot{U},min}$ zutrifft und sich der Prozess in einem unzulässigen Zustand befindet. Für den Fall "J=ja" wird das Expansionsventil um den Wert $\Delta y_{EXV}$ so geändert, dass der Mengenstrom des Kältemittels reduziert wird, um den Wert für $T_{\ddot{U}}$ anzuheben.

Mit dem Zählparameter "Zähler 2" erfolgt ein Vergleich der Zeitschritte mit der näherungsweise konstanten und vorzugebenden Totzeit $t_{V,tot}$ , welche auftritt, wenn sich der Zustand des Verdampfungsprozesses von der MSS-Kennlinie entfernt. Ist "Zähler 2" größer oder gleich $t_{V,tot}$, dann wird der aktuelle Sollwert $T_{\ddot{U},Soll}$ um den Wert $\Delta T_{\ddot{U},MSS}$ geändert und anschließend "Zähler 2" wieder zurück gesetzt. Wenn "Zähler 2" kleiner als $t_{V,tot}$ ist, dann wird lediglich "Zähler 1" zurückgesetzt.

Ergibt der Vergleich von $T_{\ddot{U}}$ mit $T_{\ddot{U},min}$, dass die minimale Überhitzungstemperatur nicht (N) unterschritten ist, dann befindet sich der Verdampfungsprozess im zulässigen Bereich der MSS-Kennlinie. Mit der Annahme, dass wegen der Regelung näherungsweise gilt: $T_{\ddot{U}} = T_{\ddot{U},Soll}$, erfolgt die Bestimmung des dynamischen Parameters Anstieg $\alpha_{TnV}$.

Wenn $\alpha_{TnV} > 0$ zutrifft, dann bleibt der Sollwert $T_{\ddot{U},Soll}$ für den Regler weiter gültig und der Zählparameter "Zähler 1" für die Anzahl der Zeitschritte zur Erkennung eines stabilen Verdampfungszustands wird erhöht.

Ist dagegen $\alpha_{TnV} < \alpha_{TnV,MSS}$, d.h. dem Wert für die Dynamik des Prozesses am MSS-Zustand, dann wird wiederum das Expansionsventil um den Wert $\Delta y_{EXV}$ verstellt, um die Stabilität zu sichern.

Nach dieser beschriebenen Kontrolle, wie und ob sich der Prozess an der MSS-Kennlinie befindet wird die Arbeitsweise der permanent wirksamen Annäherung an den MSS- Zustand erklärt, indem für den aktuellen Arbeitsbereich durch Auswertung der Funktion $\dot{Q}_{Wv} = f(T_{\ddot{U}} \pm \Delta T_{\ddot{U},Toleranz})$ eine Nachführung des Sollwerts $T_{\ddot{U},Soll}$ um den Korrekturwert $\Delta T_{\ddot{U},Annäherg}$ als erforderlich erkannt wird oder nicht, um durch den Regler den Prozess wieder in die Nähe der MSS-Kennlinie zu bringen.

Dazu erfolgt zunächst eine Kontrolle, ob der Zählparameter "Zähler 1" >= $\Delta t_{stabil}$ ist, wobei $\Delta t_{stabil}$ eine mit beliebigem Wert vorzugebende Größe ist, die das dynamische Verhalten eines Verdampfers bzw. der Wärmepumpe berücksichtigt und eine Aussage erlaubt, ob sich der Verdampfungsprozess über diese Mindestzeitdauer von $\Delta t_{stabil}$ in einem stabilen Zustand befindet. Wenn die Bedingung für "Zähler 1" erfüllt ist wird weiterhin kontrolliert, ob gerade noch ein Annäherungsvorgang aus dem vorhergehenden Arbeitsschritt aktiv ist.

Wird die Annäherungsfunktion gestartet, dann erfolgt zunächst die Kontrolle, ob der Zählparameter "Zähler 3" kleiner ist als die Vorgabezeit für ein Annäherungsintervall $\Delta t_{Annäherg}$. Wenn die Bedingung gilt: "Zähler 3" < $\Delta t_{Annäherg}$, dann wird der Wert für "Zähler 3" erhöht, ist die Bedingung nicht erfüllt, dann erfolgt die oben beschriebene Kontrolle, ob sich der aktuelle Wert für $T_{\ddot{U}}$ im Toleranzbereich $\pm \Delta T_{\ddot{U},Toleranz}$ befindet und eine eventuell erforderliche Sollwertänderung.

Danach wird kontrolliert, ob die MSS-Kennlinie monoton steigend verläuft.

Wenn dies zutrifft, ist die Nachführung beendet.

Ist hingegen die Monotonie-Bedingung nicht erfüllt, beginnt eine sichere Rückführung in den stabilen Arbeitsbereich, um die Monotonie wieder zu sichern.

In Fig. 5a ist ein Teil zur Sollwertbestimmung anhand eines Programmablaufplans gemäß einem Ausführungsbeispiel der Erfindung veranschaulicht.

Über Sensoren werden die Temperatur nach dem Verdampfer $T_{nV}$ und der Druck im Verdampfer $p_V$ erfasst. Die Ventilstellung $y_{EXV}$ ist bekannt, da es sich dabei um die Stellgröße des Reglers handelt. Unter Nutzung kältemittelspezifischer Regressionsgleichungen werden $c_p''(p_V)$, $h''(p_V)$ und die Verdampfungstemperatur $T_V(p_V)$ berechnet. Die Überhitzungstemperatur $T_{\ddot{U}}$ ist die Differenz aus $T_{nV}$ und $T_V$. Für die MSS- Erkennung wird der geglättete Anstieg von $T_{nV}$ verwendet, welcher in der Variablen $\alpha_{TnV}$ hinterlegt wird. Die Berechnung der virtuellen Leistung erfolgt über die Formel (8):

$$\dot{Q}_{Wv} = (T_{\ddot{U}} \cdot c_p'' + h'') \cdot K_{EXV} \cdot y_{EXV} \qquad (8)$$

Der aktuelle Arbeitsbereich (AB) mit Index $i$ ergibt sich als ganzzahliger Wert aus dem Verhältnis von aktueller virtueller Leistung zu der maximalen Leistung des Expansionsventils, multipliziert mit der Anzahl der festgelegten Arbeitsbereiche $m$, wie in Formel (7) angegeben.

Stimmt $i$ mit dem Arbeitsbereich des vorhergehend berechneten Zyklus $j$ überein, so wird $T_{\ddot{U},MSS}(i)$ aus der Kennlinie ausgelesen und der Sollwert $T_{\ddot{U},soll}$ als Summe der minimalen Überhitzungstemperatur $T_{\ddot{U},min}$ und $T_{\ddot{U},MSS}$ gebildet. Bei einer Abweichung von $i$ zu $j$ wird $T_{\ddot{U},MSS}$ durch weiches Umschalten auf den neuen Kennlinienwert angeglichen.

In Fig. 5b ist ein Teil zur selbsttätigen Nachführung der MSS-Kennlinie anhand des Programmablaufplans gemäß einem Ausführungsbeispiel der Erfindung veranschaulicht.

Wird der Grenzwert $T_{Ü,min}$ von $T_Ü$ nicht unterschritten und ist $\alpha_{TnV} \geq \alpha_{TnV,MSS}$ so wird die Überhitzungstemperatur nach dem Sollwert $T_{Ü,soll}$ geregelt. Der MSS- Zustand gilt als erkannt bzw. wird angenommen, wenn eine dieser Bedingungen nicht erfüllt ist. Um den Prozess wieder in einen stabilen Arbeitspunkt zu führen, wird das Expansionsventil um den Betrag $\Delta y_{EXV}$ geschlossen. Es erfolgt eine zyklische Erhöhung des hinterlegten AB-spezifischen Sollwerts im Intervall $\Delta t_{V,tot}$ um den Betrag $\Delta T_{Ü,MSS}$. ZählerI wird auf 0 gesetzt. Bedingung für das Verlassen des MSS ist, dass entweder $\alpha_{TnV}>0$ oder $T_Ü \geq T_{Ü,soll}$ ist. Ist dies der Fall, so erfolgt eine zyklische Erhöhung von ZählerI um die Zykluszeit, bis die als Parameter eingestellte notwendige Stabilitätszeit $\Delta t_{stabil}$ vergangen ist. Dann befindet sich der Prozess wieder in einem stabilen Arbeitspunkt (AP).

Wenn die Annäherungsfunktion aktiviert ist, erfolgt eine zyklische Erhöhung von Zähler3 um die Zykluszeit. Ist $Zähler3 \geq \Delta t_{Annäherg}$ und befindet sich $T_Ü$ innerhalb eines Toleranzbandes $T_{Ü,soll} \pm \Delta T_{Ü,Toleranz}$, so wird der im aktuellen AB $i$ hinterlegte Sollwert um $\Delta T_{Ü,Annänerg}$ verringert und Zähler3 zurückgesetzt.

Die Monotonie der MSS-Kennlinie wird geprüft. Ist diese nicht monoton steigend, so erfolgt eine Anpassung der Sollwerte um $i$, um eine monoton steigende MSS-Kennlinie sicherzustellen.

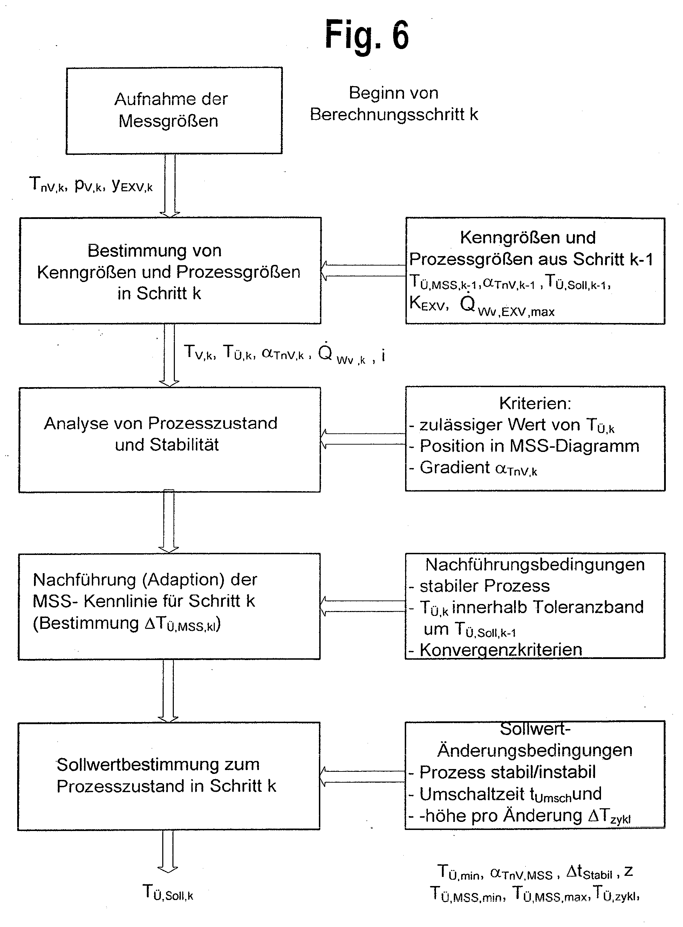

In Fig. 6 wird anhand einer Block-Darstellung des Ablaufes der funktionswichtigsten Aktivitäten eine vereinfachte, kompakte Erläuterung des seiner Funktionsweise nach energiebilanzgesteuerten Reglers für Verdampfungsregelungen von Wärmepumpen gegeben.

Durch Erfassen des energetischen Bilanzzustands der Anlage mittels Sensoren, die beispielsweise Druck/Temperatur am Ein-/Ausgang des Verdampfers sowie den Stellhub des Expansionsventils abtasten, kann der Zustand des Systems bestimmt werden.

Insbesondere kann das Verfahren in einem Regler implementiert werden, wobei die Funktionsvorschrift des Reglers derart ausgestaltet ist, dass anhand der erfassten Werte und einem in dem Regler implementierten Modell des Systems sowie durch Abschätzen einer virtuellen Leistung der Anlage eine virtuelle MSS-Kennlinie berechnet wird.

Weiterhin kann der Regler angepasst sein, die Anlage über Stellen des Expansionsventils auf einen Wert nahe der virtuellen MSS-Kennlinie zu betreiben.

Gleichzeitig wird das System überwacht, ob sich dieses in einem stabilen Zustand befindet (bzw. der Verdampfer im stabilen Bereich arbeitet), beispielsweise durch Auswerten des Gradienten des Temperaturverlaufs am Ausgang des Verdampfers.

Wenn eine Instabilität erkannt wird, kann eine Ausgleichsregelung der Anlage (entsprechendes Stellen des Expansionsventils) erfolgen und der entsprechende Wert der virtuellen MSS-Kennlinie wird mit dem tatsächlichen Wert des Übergangs in den instabilen Bereich überschrieben werden.

Dadurch kann beispielsweise ein verbesserter Wirkungsgrad bei geringerem Anlagenverschleiß erreicht werden.

**Patentansprüche**

1. Verfahren für die Steuerung und Regelung der Überhitzungstemperatur ($T_Ü$) eines Kältemittels in einer Verdampfungseinrichtung im Kreislauf eines Anlagensystems einer Wärmepumpe oder Kühlanlage, mit den Schritten:

   Bestimmen einer virtuellen Wärmeleistung der Verdampfungseinrichtung mittels Bilden einer virtuellen Energiestrom-Bilanz;
   Bestimmen des Sollwerts ($T_{Ü, Soll}$) für die Regelgröße Überhitzungstemperatur unter Beachtung einer virtuellen MSS-Kennlinie, die einer Grenzlinie zwischen einer stabilen Arbeitsweise des Verdampfungsprozesses und einem instabilen Betrieb des Verdampfers entspricht; und
   Betätigen eines Expansionsventils des Anlagensystems, so dass die Überhitzungstemperatur ($T_Ü$) möglichst nahe an den Sollwert für die Überhitzungstemperatur ($T_{Ü, Soll}$) herangeführt wird,
   wobei die virtuelle Wärmeleistung ($\dot{Q}_{WV}$) der Verdampfungseinrichtung aus der funktionalen Abhängigkeit von den bekannten Größen Überhitzungstemperatur ($T_Ü$), spezifische Wärmekapazität ($c''_p(p_V)$) sowie spezifische Enthalpie des Kältemittels im Sattdampfzustand ($h''(p_V)$), dem Hub des Expansionsventils ($y_{EXV}$) und einem Korrekturfaktor ($K_{EXV}$), welcher für jeden Arbeitspunkt zu bilden ist und im Nennarbeitspunkt des Expansionsventils die Wärmeleistung des Kältemittels für den Ventilhub ausdrückt, gebildet wird,
   wobei die virtuelle MSS-Kennlinie ($\dot{Q}_{WV}(T_{Ü,MSS})$) die Funktion der virtuellen Wärmeleistung ($\dot{Q}_{WV}$) über die Überhitzungstemperatur ($T_Ü$) ist, und
   wobei die Bestimmung des Sollwerts ($T_{Ü,Soll,i}$) über den Arbeitsbereich der Wärmepumpe oder Kühlanlage jeweils an der Stabilitätsgrenze des Regelungssystems, die anhand des Anstiegswinkels ($\alpha_{TnV}$) in der zeitlichen Abhängigkeit der Temperatur am Verdampferaustritt ($T_{nV}$) und dem Abstand der Überhitzungstemperatur ($T_{Ü,i}$)

von dem durch die virtuelle MSS-Kennlinie bestimmten Grenzwert ($T_{Ü,MSS,i}$) in jedem Arbeitspunkt (i) des Arbeitsbereichs der Wärmepumpe oder Kühlanlage bestimmt wird, erfolgt, wobei der Index i den aktuellen Arbeitspunkt (i) als die Lage der aktuellen virtuellen Wärmeleistung der Verdampfungseinrichtung ($\dot{Q}_{Wv,i}$) im Bereich der virtuellen Wärmeleistung von 0 bis zu der maximalen durch die Bauart des Expansionsventils begrenzten virtuellen Wärmeleistung ($\dot{Q}_{Wv,EXV,max}$) kennzeichnet.

2. Verfahren gemäß Anspruch 1, **dadurch gekennzeichnet, dass** der Sollwert der Regelgröße ($T_{Ü,Soll}$) außer von dem Wert ($T_{Ü,MSS}$) weiterhin von einem vorgebbaren Wert ($T_{Ü,min}$) über die Beziehung $T_{Ü,Soll} = T_{Ü,MSS} + T_{Ü,min}$ abhängt, der ein anlagenspezifisch festzulegender Wert ist, der einen Mindestwert der Überhitzungstemperatur mit einem bestimmten Abstand zum Wert ($T_{Ü,MSS}$) auf der MSS-Kennlinie darstellt, so dass ein stabiler Zustand der Anlage erreicht wird.

3. Verfahren gemäß Anspruch 2, **dadurch gekennzeichnet, dass** das Anlagensystem hinsichtlich einer stabilen bzw. instabilen Prozesssituation überwacht wird, wobei bei Erkennung einer instabilen Prozesssituation eine zusätzlicher vorübergehend wirkender Überhöhungswert ($T_{Ü,instab}$) dem Sollwert ($T_{Ü,Soll}$) hinzuaddiert wird, um damit ein schnelles Schließen des Expansionsventils zu erreichen und den Regelungsprozess damit schnell in den stabilen Arbeitsbereich zu überführen.

4. Verfahren gemäß Anspruch 3, **dadurch gekennzeichnet, dass** die Arbeitsweise des Prozesses und der Regeleinrichtung selbsttätig daraufhin kontrolliert wird, ob diese sich im stabilen Arbeitsbereich befinden, indem mittels auf messbare Größen und Parameter gestützten statischen und dynamischen Merkmalen, insbesondere durch Vergleich des Istwerts des Anstiegswinkels ($\alpha_{TnV}$) mit einem anlagenspezifisch wählbaren Grenzwert, ab dem Instabilität zu beobachten ist, und durch Vergleich von Istwert der Überhitzungstemperatur ($T_Ü$) mit dem Wert auf der virtuellen MSS-Kennlinie ($T_{Ü,MSS}$), die Stabilität bzw. Instabilität festgestellt wird.

5. Verfahren gemäß Anspruch 4, **dadurch gekennzeichnet, dass** in jedem der mit einem zeitlichen Abstand (T) aufeinanderfolgend aufgenommenen Prozesszustände eine selbsttätige Korrektur der virtuellen MSS-Kennlinie um den Wert ($\Delta T_{Ü,MSS}$) erfolgt, wodurch eine Anpassung an die im jeweiligen Arbeitspunkt tatsächlich bestehenden Prozesseigenschaften erreicht wird und somit die virtuelle MSS-Kennlinie im wesentlichen proportional zur realen MSS-Kennlinie verläuft.

6. Verfahren gemäß Anspruch 5, **dadurch gekennzeichnet, dass** über festlegbare Zeitabschnitte ($\Delta t_{stabil}$) die Stabilität und Stationarität des Verdampfungsprozesses dadurch festgestellt wird, dass für die Werte der messbaren und rechnerisch rekonstruierbaren Größen, insbesondere des Anstiegswinkels ($\alpha_{TnV}$), Toleranzbänder festgelegt werden, die nicht zu verlassen sind, damit eine Korrektur von Sollwert bzw. MSS-Kennlinie nur dann erfolgt, wenn sich der Prozess in einem stationären bzw. stabilen Zustand befindet.

7. Verfahren gemäß Anspruch 6, **dadurch gekennzeichnet, dass** Änderungen des Sollwerts ($T_{Ü,Soll}$) oder von Punkten der virtuellen MSS-Kennlinie nur so groß zulässig sind, dass dadurch keine Schwankungen der Prozessgrößen, insbesondere der Regelgröße, entstehen, indem eine stetige Verstellung des wirksamen Sollwerts im Regler gewährleistet ist.

8. Verfahren gemäß Anspruch 7, **dadurch gekennzeichnet, dass** eine Überwachung der Monotonie des Verlaufs der virtuellen MSS-Kennlinie erfolgt, wobei, wenn erfasst wird, dass diese nicht monoton steigend verläuft, eine solche Anpassung des Sollwerts ($T_{Ü,Soll}$) erfolgt, um eine monoton steigende MSS-Kennlinie sicherzustellen.

**Claims**

1. A method for the control and feedback control of the overheating temperature ($T_Ü$) of a refrigerant in an evaporating means in the circuit of a plant system of a heat pump or cooling system, comprising the steps of:

    determining a virtual heat output of the evaporating means by forming a virtual energy flow balance;
    determining the target value ($T_{Ü, Soll}$) for the overheating temperature as controlled variable in consideration of a virtual MSS curve, which corresponds to a borderline between a stable operating mode of the evaporation process and an unstable operation of the evaporator; and
    operating an expansion valve of the plant system, so that the overheating temperature ($T_Ü$) is brought as closely as possible to the target value for the overheating temperature ($T_{Ü, Soll}$),

wherein the virtual heat output ($\dot{Q}_{WV}$) of the evaporating means is formed of the functional dependency of the known variables, overheating temperature ($T_{Ü}$), specific heat capacity ($c''_p(p_v)$) as well as specific enthalpy of the refrigerant in the saturated steam state ($h''(p_v)$), the stroke of the expansion valve ($y_{EXV}$) and a correction factor ($K_{EXV}$) which is to be formed for every operating point and which expresses the heat output of the refrigerant for the valve stroke in the nominal operating point of the expansion valve,

wherein the virtual MSS curve ($\dot{Q}_{WV}(T_{Ü,MSS})$) is the function of the virtual heat output ($\dot{Q}_{WV}$) over the overheating temperature ($T_{Ü}$), and

wherein the determination of the target value ($T_{Ü,Soll,i}$) is carried out over the working range of the heat pump or the cooling system at the stability limit of the control system, respectively, said limit being determined by means of the rise angle ($\alpha_{TnV}$) in the temporal dependence of the temperature at the evaporator exit ($T_{nV}$) and the distance of the overheating temperature ($T_{Ü,I}$) from the limit value ($T_{Ü,MSS,i}$) determined by the virtual MSS curve at each operating point (i) of the working range of the heat pump or cooling system, index i marking the current operating point (i) as the position of the current virtual heat output of the evaporating means ($\dot{Q}_{WV,i}$) in the area of the virtual heat output from 0 to the maximum virtual heat output ($\dot{Q}_{WV,EXV,max}$) limited by the design of the expansion valve.

2. The method according to claim 1, **characterized in that** the target value of the controlled variable ($T_{Ü,Soll}$) depends, further to the value ($T_{Ü,MSS}$), on a predeterminable value ($T_{Ü,min}$) via the equation $T_{Ü,Soll} = T_{Ü,MSS} + T_{Ü,min}$, this value having to be fixed according to the plant requirements and forming a minimum value of the overheating temperature at a specific distance to the value ($T_{Ü,MSS}$) on the MSS curve, so that a stable state of the plant is achieved.

3. The method according to claim 2, **characterized in that** the plant system is monitored regarding a stable/unstable process situation, wherein, when an unstable process situation is recognized, an additional, temporarily active exaggeration value ($T_{Ü,instab}$) is added to the target value ($T_{Ü,Soll}$) to thereby achieve a rapid closing of the expansion valve, so that the control process is quickly transferred into the stable working range.

4. The method according to claim 3, **characterized in that** the mode of operation of the process and the control means are automatically checked as to whether they are in the stable working range **in that** stability/instability is determined by means of static and dynamic features supported on measurable variables and parameters, particularly by comparing the actual value of the rise angle ($\alpha_{TnV}$) with a limit value which is selectable according to the plant requirements and from which instability is to be observed, and by comparing the actual value of the overheating temperature ($T_{Ü}$) with the value on the virtual MSS curve ($T_{Ü,MSS}$).

5. The method according to claim 4, **characterized in that**, in each of the process states recorded successively at a time distance (T), the virtual MSS curve is automatically corrected by the value ($\Delta T_{Ü,MSS}$), thereby obtaining an adaptation to the process properties actually existing in the respective work point, so that the virtual MSS curve basically extends proportionally to the real MSS curve.

6. The method according to claim 5, **characterized in that**, via fixable time periods ($\Delta t_{stabil}$), the stability and stationarity of the evaporation process is determined **in that**, for the values of the measurable quantities which can be reconstructed by calculation, particularly of the rise angle ($\alpha_{TnV}$), tolerance bands are fixed and may not be left, so that the target value or the MSS curve is only corrected if the process is in a stationary or stable state.

7. The method according to claim 6, **characterized in that** changes of the target value ($T_{Ü,Soll}$) or of points of the virtual MSS curve are only admissible to such an extent that they do not give rise to any variations of the process variables, particularly the controlled variable, **in that** a constant adjustment of the effective target value in the controller is ensured.

8. The method according to claim 7, **characterized in that**, the monotony of the course of the virtual MSS curve is monitored, wherein, when it is detected that the latter is not monotonously rising, such an adaptation of the target value ($T_{Ü,Soll}$) takes place so as to ensure a monotonously rising MSS curve.

**Revendications**

1. Procédé de commande et de régulation de la température de surchauffe ($T_{Ü}$) d'un agent frigorifique dans un dispositif d'évaporation dans la circulation d'un système d'installation d'une pompe à chaleur ou d'une installation réfrigérante, avec les étapes de :

détermination d'une puissance thermique virtuelle du dispositif d'évaporation au moyen d'images d'un bilan de flux d'énergie virtuel ;

détermination de la valeur nominale ($T_{\ddot{U},Soll}$) pour la grandeur de réglage qu'est la température de surchauffe dans le respect d'une courbe caractéristique MSS virtuelle qui correspond à une ligne limite entre une façon de fonctionner stable du processus d'évaporation et une exploitation instable de l'évaporateur ; et

actionnement d'une soupape de détente du système d'installation de sorte que la température de surchauffe ($T_{\ddot{U}}$) soit approchée au plus près de la valeur nominale pour la température de surchauffe ($T_{\ddot{U},Soll}$),

dans lequel la puissance thermique virtuelle ($\dot{Q}_{WV}$) du dispositif d'évaporation est constituée à partir de la dépendance fonctionnelle vis-à-vis des grandeurs connues que sont la température de surchauffe ($T_{\ddot{U}}$), la capacité thermique spécifique ($c''_p(p_V)$) ainsi que l'enthalpie spécifique de l'agent frigorifique à l'état de vapeur saturée ($h''(p_V)$), la course de la soupape de détente ($Y_{EXV}$) et un facteur de correction ($K_{EXV}$) qui est à constituer pour chaque point de fonctionnement et exprime la puissance thermique de l'agent frigorifique pour la course de la soupape dans le point de fonctionnement nominal de la soupape de détente,

dans lequel la courbe caractéristique MSS virtuelle ($Q_{WV}(T_{\ddot{U},MSS})$) est la fonction de la puissance thermique virtuelle ($Q_{WV}$) sur la température de surchauffe ($T_{\ddot{U}}$), et

dans lequel la détermination de la valeur nominale ($T_{\ddot{U},Soll,i}$) sur la plage de fonctionnement de la pompe à chaleur ou de l'installation réfrigérante s'effectue respectivement au niveau de la limite de stabilité du système de régulation, laquelle est déterminée par l'intermédiaire de l'angle d'augmentation ($\alpha_{TnV}$), dans la dépendance temporelle de la température au niveau de la sortie de l'évaporateur ($T_{nV}$) et de l'écart de la température de surchauffe ($T_{\ddot{U},i}$), par la valeur limite ($T_{\ddot{U},MSS,i}$) déterminée au travers de la courbe caractéristique MSS virtuelle dans chaque point de fonctionnement (i) de la plage de fonctionnement de la pompe à chaleur ou de l'installation réfrigérante, dans lequel l'indice i caractérise le point de fonctionnement (i) en cours en tant que situation de la puissance thermique virtuelle en cours du dispositif d'évaporation ($Q_{WV,i}$) dans la plage de la puissance thermique virtuelle de 0 à la puissance thermique virtuelle maximale ($Q_{WV,EXV,max}$) limitée par le type de la soupape de détente.

2. Procédé selon la revendication 1, **caractérisé en ce que** la valeur nominale de la grandeur de réglage ($T_{\ddot{U},Soll}$) dépend, outre de la valeur ($T_{\ddot{U},MSS}$), en outre d'une valeur qui peut être prédéfinie ($T_{\ddot{U},min}$) sur la relation $T_{\ddot{U},Soll} = T_{\ddot{U},MSS} + T_{\ddot{U},min}$, laquelle valeur est une valeur à établir spécifiquement pour l'installation, laquelle valeur représente une valeur minimale de la température de surchauffe avec un écart déterminé par rapport à la valeur ($T_{\ddot{U},MSS}$) sur la courbe caractéristique MSS, de sorte qu'un état stable de l'installation soit atteint.

3. Procédé selon la revendication 2, **caractérisé en ce que** le système d'installation est surveillé en ce qui concerne une situation de processus stable ou instable, dans lequel lors de l'identification d'une situation de processus instable, une valeur de dépassement ($T_{\ddot{U},Instab}$) supplémentaire agissant temporairement est ajoutée à la valeur nominale ($T_{\ddot{U},Soll}$) pour ainsi atteindre une fermeture rapide de la soupape de détente et ainsi amener rapidement le processus de régulation dans la plage de fonctionnement stable.

4. Procédé selon la revendication 3, **caractérisé en ce que** la façon de fonctionner du processus et du dispositif de régulation est ensuite automatiquement contrôlée pour voir si celle-ci se trouve dans la plage de fonctionnement stable, **en ce que** la stabilité ou l'instabilité est constatée, au moyen de caractéristiques statiques et dynamiques qui s'appuient sur des grandeurs et des paramètres mesurables, en particulier par comparaison de la valeur effective de l'angle d'augmentation ($\alpha_{TnV}$) avec un valeur limite éligible spécifiquement pour l'installation, à partir de quoi une instabilité est observée, et par comparaison de la valeur réelle de la température de surchauffe ($T_{\ddot{U}}$) avec la valeur sur la courbe caractéristique MSS virtuelle ($T_{\ddot{U},MSS}$).

5. Procédé selon la revendication 4, **caractérisé en ce que** dans chacune des situations de processus enregistrées successivement avec un écart temporel (T), une correction automatique de la courbe caractéristique MSS virtuelle est effectuée à hauteur de la valeur ($\Delta T_{\ddot{U},MSS}$), par quoi un ajustement aux propriétés qui existent effectivement dans le point de fonctionnement respectif est atteint et ainsi la courbe caractéristique MSS virtuelle se déroule pour l'essentiel proportionnellement à la courbe caractéristique MSS réelle.

6. Procédé selon la revendication 5, **caractérisé en ce que** sur des périodes définissables ($\Delta t_{stabil}$), la stabilité et la stationnarité du processus d'évaporation sont constatées du fait que pour les valeurs des grandeurs mesurables et calculables pouvant être reconstruites, en particulier de l'angle d'augmentation ($\alpha_{TnV}$), des bandes de tolérance sont préétablies qui ne peuvent être quittées, afin qu'une correction de valeur nominale ou de courbe caractéristique MSS s'effectue uniquement lorsque le processus se trouve dans un état stationnaire ou stable.

7. Procédé selon la revendication 6, **caractérisé en ce que** des modifications de la valeur nominale ($T_{\text{Ü,Soll}}$) ou de points de la courbe caractéristique MSS virtuelle sont uniquement autorisées jusqu'à une taille telle qu'aucune variation des grandeurs de processus, en particulier des grandeurs de réglage, ne se produit du fait qu'un décalage constant de la valeur nominale agissante est garantie dans le régulateur.

8. Procédé selon la revendication 7, **caractérisé en ce que** s'effectue une surveillance de la monotonie du déroulement de la courbe caractéristique MSS virtuelle, dans lequel lorsqu'il est détecté que celle-ci ne se déroule pas de façon monotone croissante, un tel ajustement de la valeur nominale ($T_{\text{Ü,Soll}}$) s'effectue pour garantir une courbe caractéristique MSS monotone croissante.

# Fig. 1

EP 2 526 353 B1

## Fig. 2

# Fig. 3

# Fig. 4

Erreichen und Erkennen von MSS, Erhöhung $T_{\ddot{U}H,Soll}$ Exp.-Ventil Schließen

Iterative Näherung an MSS durch Öffenen des Exp.-ventils

Änderung von $T_{\ddot{U}H,Soll}$ für den AP des Verdampfers

$T_{\ddot{U}H,Soll}$

$T_{\ddot{U}H,ist}$

$T_{nV}$

$\alpha_{TnV} < \alpha_{TnV,grenz}$

bleibend stabil

instabil

Stabilitätszeit (P4)

t in s

$T$ in °C

MSS

$\dfrac{T_{nV}}{°C}$

1

# Fig. 5a

Start

Messwerte: $T_{nv}$, $p_v$, $y_{EXV}$

Berechnung von $T_v$, $c''_p$ und $h''$ aus dem Wert des Drucksensors unter Nutzung kältemittelspezifischer Regressionsgleichungen

$$T_{Ü} = T_{nv} - T_v$$

$a_{Tnv}$ = geglätteter Anstieg von $T_{nv}$

Bestimmung der virtuellen Leistung: $\dot{Q}_{WV} = (T_{Ü} \cdot c''_p + h'') \cdot K_{EXV} \cdot y_{EXV}$

Bestimmung des aktuellen Arbeitsbereichs (AB): $i = \dfrac{\dot{Q}_{WV}}{\dot{Q}_{EXV,max}} \cdot m$

$i \neq j$

J

N

$T_{Ü,MSS}$ für aktuellen AB der MSS-Kennlinie entnehmen

Weiches Umschalten von $T_{ü,MSS}$ danach j=i

$$T_{Ü,soll} = T_{Ü,min} + T_{Ü,MSS}$$

1

# Fig. 5b

# Fig. 6

```
┌─────────────────────────┐
│      Aufnahme der       │          Beginn von
│       Messgrößen        │       Berechnungsschritt k
└─────────────────────────┘
```

$T_{nV,k}$, $p_{V,k}$, $y_{EXV,k}$

```
┌─────────────────────────────┐        ┌──────────────────────────────┐
│      Bestimmung von         │        │       Kenngrößen und         │
│ Kenngrößen und Prozessgrößen│◄───────│ Prozessgrößen aus Schritt k-1│
│       in Schritt k          │        │                              │
└─────────────────────────────┘        └──────────────────────────────┘
```

$T_{Ü,MSS,k-1}$, $\alpha_{TnV,k-1}$, $T_{Ü,Soll,k-1}$, $K_{EXV}$, $\dot{Q}_{WV,EXV,max}$

$T_{V,k}$, $T_{Ü,k}$, $\alpha_{TnV,k}$, $\dot{Q}_{WV,k}$, $i$

```
┌─────────────────────────────┐        ┌──────────────────────────────┐
│  Analyse von Prozesszustand │        │          Kriterien:          │
│        und Stabilität       │◄───────│ - zulässiger Wert von $T_{Ü,k}$ │
│                             │        │ - Position in MSS-Diagramm   │
│                             │        │ - Gradient $\alpha_{TnV,k}$    │
└─────────────────────────────┘        └──────────────────────────────┘
```

```
┌─────────────────────────────┐        ┌──────────────────────────────┐
│  Nachführung (Adaption) der │        │   Nachführungsbedingungen    │
│  MSS- Kennlinie für Schritt k│       │ - stabiler Prozess           │
│  (Bestimmung $\Delta T_{Ü,MSS,k}$)│◄──│ - $T_{Ü,k}$ innerhalb Toleranzband│
│                             │        │   um $T_{Ü,Soll,k-1}$          │
│                             │        │ - Konvergenzkriterien        │
└─────────────────────────────┘        └──────────────────────────────┘
```

```
┌─────────────────────────────┐        ┌──────────────────────────────┐
│                             │        │         Sollwert-            │
│   Sollwertbestimmung zum    │        │    Änderungsbedingungen      │
│  Prozesszustand in Schritt k│◄───────│ - Prozess stabil/instabil    │
│                             │        │ - Umschaltzeit $t_{Umsch}$ und  │
│                             │        │ - -höhe pro Änderung $\Delta T_{zykl}$│
└─────────────────────────────┘        └──────────────────────────────┘
```

$T_{Ü,Soll,k}$

$T_{Ü,min}$, $\alpha_{TnV,MSS}$, $\Delta t_{Stabil}$, $z$

$T_{Ü,MSS,min}$, $T_{Ü,MSS,max}$, $T_{Ü,zykl}$,

**IN DER BESCHREIBUNG AUFGEFÜHRTE DOKUMENTE**

**In der Beschreibung aufgeführte Patentdokumente**

- US 4523435 A
- DE 3713869 C2
- DE 19506143 C2
- US 5735134 A
- US 5966950 A
- WO 2008080436 A1